**Europäisches Patentamt**

**European Patent Office**

**Office européen des brevets**

(19)

(11) Numéro de publication: **0 064 118**
**A1**

(12) ## DEMANDE DE BREVET EUROPEEN

(21) Numéro de dépôt: **81401016.1**

(22) Date de dépôt: **24.06.81**

(51) Int. Cl.³: **G 02 C 7/16**

(30) Priorité: **06.05.81 FR 8109001**

(43) Date de publication de la demande:
**10.11.82 Bulletin 82/45**

(84) Etats contractants désignés:
**AT BE CH DE IT LI NL SE**

(71) Demandeur: **Marquand Ferreux, Huguette**
**5, Rue Victor Hugo**
**F-92230 Gennevilliers(FR)**

(72) Inventeur: **Marquand Ferreux, Huguette**
**5, Rue Victor Hugo**
**F-92230 Gennevilliers(FR)**

(54) **Lunettes focalisantes de lecture, de mise au point, destinées également au travail sur des éléments de petites dimensions et à la gymnastique oculaire.**

(57) Lunettes de lecture focalisantes utiles pour le travail sur des éléments de petites dimensions, pour la lecture et certains mouvements de gymnastique oculaire, comportant comme éléments optiques à la place occupée d'ordinaire par les lentilles optiques, deux disques opaques percés chacun de trous de petites dimensions de l'ordre de 1mm. à 3mm, de diamétre, présentant entre eux un espace légérement supérieur à leur diamètre.

Fig. 2

**EP 0 064 118 A1**

Croydon Printing Company Ltd.

**0064118**

<u>LUNETTES FOCALISANTES SANS RECOURS A DES LENTILLES OPTIQUES</u>

La présente invention concerne un type de lunettes focalisantes utiles pour "faire le point" avant prise de vue photographique ou cinématographique, pour apprécier les contrastes sur pellicules négatives ou positives ainsi que la valeur des couleurs, tant pour des peintres que pour les professionnels de l'image. Elles sont utiles en outre pour le travail sur des objets de petites dimensions, pour la lecture-notamment pour les presbytes et pour la gymnastique oculaire.

En optique on utilise généralement des lentilles pour corriger la vue lorsqu'il y a des défauts de vision. Les yeux s'habituent à cette assistance et les défauts s'accentuent avec le temps exigeant des corrections de plus en plus fortes. Traité ainsi le mal provoque un double processus néfaste pour le soigné et pour la société.

Le soigné a des verres correctifs de plus en plus forts sans espoir d'amélioration. Les organismes d'assurances ou de sécurité sociale supportent des charges inutiles. Pour les travaux minutieux de toutes sortes exigeant une acuité visuelle permanente, rien n'est prévu pour préserver l'organe de la vue.

L'avantage de ces lunettes est d'empécher ou de retarder le recours aux verres optiques. Dans de nombreux cas elles permettent de prévenir l'affaiblissement de la vue ou une amélioration de la vision, surtout si leur emploi est complété par la gymnastique oculaire.

Ces lunettes focalisantes sont une application des lois élémentaires de physique optique, leur emploi permet une vision précise des contrastes des couleurs et des formes.

Ces lunettes composées d'une monture classique, ou d'autres types de montures employées dans l'industrie comme lunettes de protection, sont caractérisées en ce qu'elles comportent comme éléments optiques à la place occupée d'ordinaire par des lentilles, deux disques opaques percés chacun de trous de petites dimensions, la distance entre les perforations étant la même dans tous les sens. Ces perforations d'un diamètre de 1mm à 3,5mm chacunes présentent entre elles un espace égal ou légèrement supérieur à leur diamètre.

Selon une première caractéristique les perforations sont disposées sur des lignes horizontales, définissant une répartition suivant une maille carrée des perforations les unes par rapport aux autres.

...\...

Selon une deuxième caractéristique l'espace perforé peut avoir différentes formes, cercle ou polygone.

Selon une troisième caractéristique ces perforations sont effectués
perpendiculairement à la surface du support lorsque celui-ci est
incurvé, de manière à ce que les axes de perforation convergent
vers les pupilles de l'utilisateur.

Selon une quatrième caractéristique les perforations couvrent la
surface d'un losange dont le plus grand axe est horizontal, de manière à définir au moins une zone opaque inférieure de repos, c'est
un supplément d'exercice pour l'utilisateur grâce aux dernières
perforations supérieures et inférieures (une en haut de chaque disque, une en bas de chaque disque, c'est à dire une pour chaque oeil
dans deux positions différentes du regard, soit les yeux mi-clos,
soit les yeux grands ouverts.).

Cette dernière caractéristique illustre bien deux des mouvements de
gymnastique consciente et inconsciente que l'utilisateur pratique
avec ces lunettes.

Gymnastique consciente : Le cillement qu'il est conseillé de pratiquer régulièrement en portant ces lunettes redevient progressivement une habitude à tout instant. C'est une forme de rééducation du
cillement. Chaque cillement des paupières présente une série de
conséquences connues : bref repos régulier des organes de la vue,
entraînant progressivement une détente générale ; bienfait dû aux
contrastes : lumière du globe oculaire ; massage de la partie de
l'oeil balayée par les paupières qui active les échanges et notamment la circulation sanguine.

Gymnastique inconsciente : L'ensemble des organes de la vue sont
sollicités pour accomoder et coordonner une vision d'ensemble à
partir des visions multiples données par les perforations des lunettes. La possibilité de regarder de temps en temps à travers une
seule perforation est à la fois exercice supplémentaire, élément de
repos (diversification des actes), prise de conscience de la vision
focalisante, de la vision mono ou binoculaire.

Selon une cinquième caractéristique et constituant une variante,
pour des raisons similaires à la quatrième caractéristique, les
perforations couvrent trois lignes horizontales au centre du disque
opaque jusqu'à recouvrir l'intégralité du champ visuel, sur le plan
horizontal.

Selon une sixième caractéristique, constituant une autre variante, les perforations sont pratiquées sur toute la surface opaque jusqu'à recouvrir l'intégralité du champ visuel sur les plans horizontal et vertical.

Selon une septième caractéristique, constituant une dernière variante les perforations peuvent être disposées sur des lignes horizontales décalées d'un demi intervalle.

Selon une huitième caractéristique, la monture des lunettes- type bandeau ou lunettes de soudeur- entoure le champ visuel. L'intérieur de la monture et dés disques sont de couleurs sombres : gris et bleus foncés jusqu'au noir et au violet.

Cette forme et ces couleurs accentuent les contrastes dans les périodes actives et de repos, la détente dans les périodes de cillement et de "palming" (c'est à dire le recouvrement des yeux avec les paumes des mains).

Selon une neuvième caractéristique, une visière d'une largeur de 2cm à 7cm (selon l'utilisation des lunettes) sera rapportée de façon articulée ou non, sur la partie supérieure de la monture, ou bien cernera l'ensemble des deux disques afin de déterminer une zone d'ombre autour des yeux.

Selon une dixième caractéristique, les disques opaques sont articulés sur la monture, avec par exemple un système de charnière, disposé en partie supérieur de chaque disque, afin que les disques puissent avoir plusieurs positions au dessus des yeux.

Ainsi l'utilisateur pourra-t-il pratiquer au maximum l'alternance.

Selon une dernière caractéristique, on pourra adjoindre des éléments avertisseurs, notamment lumineux, indiquant des périodes de gymnastique oculaire à effectuer en alternance, intégrés dans la monture et fonctionnant à des intervalles pré-déterminés.

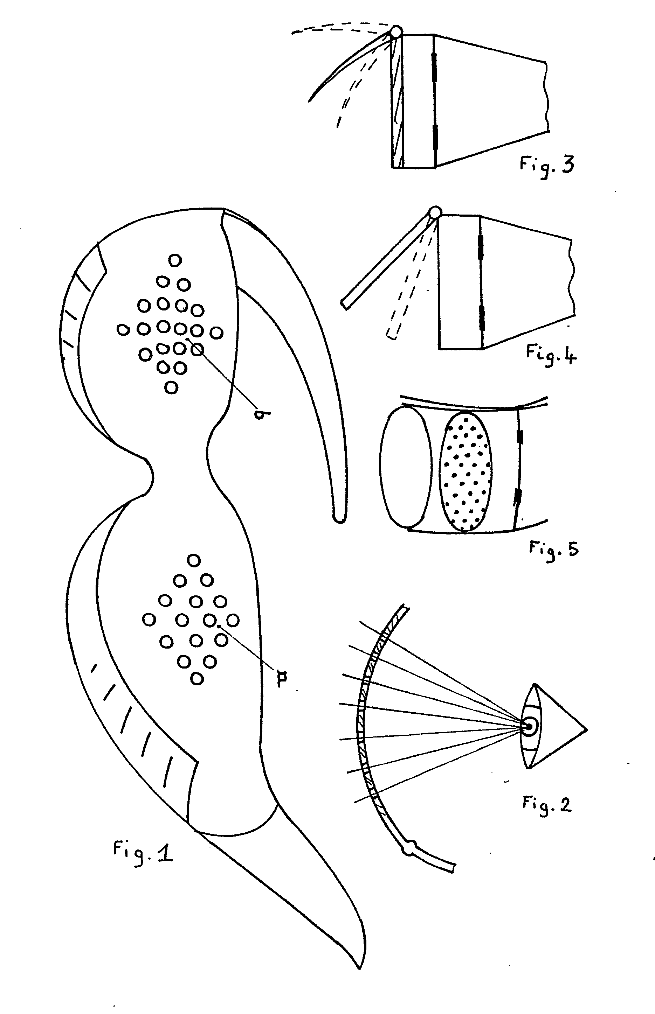

REVENDICATIONS :

1 - Lunettes de lecture focalisantes utiles pour "faire le point", avant prise de vue photographique ou cinématographiques, pour apprécier les contrastes sur pellicules négatives ou positive, ainsi que la valeur des couleurs, utiles pour le travail sur des éléments de petites dimensions, pour la lecture et certains mouvements de gymnastique oculaire. Caractérisées en ce qu'elles comportent comme éléments optiques, à la place occupée d'ordinaire par les lentilles, deux disques opaques percés chacun de trous de petites dimensions, de l'ordre de 1mm à 3,5mm de diamètre, présentant entre eux un espace égal ou légèrement supérieur à leur diamètre.

2 - Lunettes selon la revendication 1 caractérisées en ce que les perforations sont disposées sur des lignes horizontales définissant une répartition suivant une maille carrée des perforations les unes par rapport aux autres.

3 - Lunettes selon la revendication 1 ou 2 caractérisées en ce que l'espace perforé peut avoir différentes formes : cercle ou polygone.

4 - Lunettes selon la revendication 1 ou 2 caractérisées en ce que ces perforations sont effectuées perpendiculairement à la surface du support lorsque celui-ci est incurvé, de manière à ce que les axes de perforation convergent vers la pupille de l'utilisateur.

5 - Lunettes selon revendication 1 ou 2 caractérisées en ce que les perforations couvrent trois lignes horizontales au centre du disque optique jusqu'à recouvrir l'intégralité du champ visuel sur le plan horizontal.

6 - Lunettes selon la revendication 1 ou 2 caractérisées en ce que les perforations sont pratiquées sur toute la surface opaque jusqu'à recouvrir l'intégralité du champ visuel sur les plans horizontal et vertical.

7 - Lunettes selon la revendication 1 caractérisées en ce que les perforations peuvent être disposées sur les lignes horizontales décalées d'un demi intervalle.

8 - Lunettes selon la revendication 1 ou 2 caractérisées en ce que la monture (type bandeau ou lunettes de soudeur) entoure le champ visuel. L'intérieur de la monture et des disques sont de couleur sombres : gris et bleu foncé jusqu'au noir et au violet.

9 - Lunettes selon la revendication 1 ou 2 caractérisées en ce qu'une visière d'une largeur de 2cm à 7cm (selon l'utilisation) sera rapportée de façon articulée ou non sur la partie supérieure de la monture, ou bien cernera l'ensemble des deux disques afin de déterminer une zone d'ombre au dessus ou autour des yeux.

10 - Lunettes selon la caractéristique 1 ou 2 caractérisées en ce que les disques opaques sont articulés sur la monture par exemple avec un système de charnières, disposé en partie supérieure de chaque disque.

11 - Lunettes selon la revendication 1 ou 2 caractérisées en ce que l'on adjoint des éléments avertisseurs, notamment lumineux; intégrés dans la monture et fonctionnant à des intervalles de temps prédéterminés.

0064118

Fig. 3

Fig. 4

Fig. 5

Fig. 2

Fig. 1

Office européen
des brevets

**RAPPORT DE RECHERCHE EUROPEENNE**

EP 81 40 1016

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-E- 7 201 (A.A. TUNMER)<br><br>* page 1, lignes 14-39; page 2, lignes 1-18; page 2, lignes 32-41; figures 1-5 *<br><br>--- | 1-4,6, 7 | G 02 C 7/16 |
| X | US-A-3 967 885 (W.H. BYLER)<br><br>* figures 4-9; colonne 2, lignes 14-22; colonne 3, lignes 36-45; colonne 4, lignes 45-56 *<br><br>--- | 1,4-6, 8 | |
| A | FR-A- 463 975 (M.J. BESSON)<br>* en entier *<br><br>--- | 1,2,5 | |
| A | US-A-1 959 915 (C.C. GUTHRIE)<br>* page 3, lignes 101-105; figure 1 *<br><br>--- | 9 | DOMAINES TECHNIQUES RECHERCHES (Int. Cl. ³) |
| T | K. MUTZE:"ABC der optik", VEB edition, Leipzig 1961, page 845<br>* page 845, colonne de gauche, "Stenopäische Brillen" *<br><br>----- | 1 | G 02 C 7/00 |

Le présent rapport de recherche a été établi pour toutes les revendications

| Lieu de la recherche<br>LA HAYE | Date d'achèvement de la recherche<br>31-03-1982 | Examinateur<br>SARNEEL A.P.T. |
|---|---|---|